# EUROPÄISCHE PATENTSCHRIFT

(11) **EP 2 608 299 B1**
(45) Veröffentlichungstag und Bekanntmachung des Hinweises auf die Patenterteilung: **09.04.2014**
(21) Anmeldenummer: 11010139.1
(22) Anmeldetag: 22.12.2011
(51) Int. Cl.: H01M 8/02

(54) **Verfahren und Vorrichtung zum Herstellen von metallischen Bipolarplatten**
Device and method for manufacturing metallic bipolar panels
Dispositif et procédé de fabrication de plaques bipolaires métalliques

(43) Veröffentlichungstag der Anmeldung: 26.06.2013
(73) Patentinhaber: Feintool Intellectual Property AG, 3250 Lyss (CH)
(72) Erfinder: Schlatter, Ulrich, Dipl.-Ing., 3250 Lyss (CH)
(74) Vertreter: Hannig, Wolf-Dieter

(56) Entgegenhaltungen:
- DE-B3-102007 017 595
- US-A1- 2003 188 413
- US-A1- 2005 133 568

## Beschreibung

Die Erfindung betrifft ein Verfahren zum Herstellen einer aus Metalibandfolie bestehenden Bipolarplatte mit einer Oberflächenstruktur für das Strömungsfeld, Innenformen wie Löcher und Schlitze in der Platte sowie mindestens einer Referenzgeometrie an ihrer Außenform, bei dem das Band einem im unteren Totpunkt des Stößels einer Presse öffnenden und oberen Totpunkt des Stößels der Presse schließenden Werkzeug zugeführt, zwischen einem aus mindestens einem Umformstempel, Schneid- und Lochstempel und einer Führung zusammengesetzten, am Pressentisch festgelegten Werkzeugoberteil und mindestens einem eine Schneidmatrize enthaltenden, einen Hub zwischen oberen und unteren Totpunkt ausführenden Werkzeug-Unterteil beim Schließen geklemmt und anschließend einer Schneid- und Umformoperation unterworfen wird

Die Erfindung betrifft weiterhin eine Vorrichtung zum Herstellen einer aus einer Metallbandfolie bestehenden Bipolarplatte mit einer Oberflächenstruktur für das Strömungsfeld, Innenformen die Löcher und Schlitze in der Platte sowie einer Referenzgeometrie an ihrer Außenform, mit durch einen Stößel einer Presse angetriebenen Folgeverbund-Werkzeug, dessen am Pressentisch festgelegtes Werkzeug-Oberteil mindestens einen Loch- und Schneidstempel sowie eine Führungseinfassung und dessen einen Hub zwischen oberen und unteren Totpunkt des Stößels ausführendes Werkzeug-Unterteil mindestens eine Schneidmatrize enthält.

### Stand der Technik

Bipolarplatten für Brennstoffzellen bestehen bekanntlich aus einer Anodenseite und Katodenseite, die optional voneinander durch eine Zwischenwand (interconnection plate) getrennt sind. Die Anoden- und Katodenseite sind als strukturierte ebene Platten ausgebildet, deren Funktion in einer Brennstoffzelle darin besteht, die elektrische Verbindung der Brennstoffzelle und ihre Versorgung mit Wasserstoff und Luft/Sauerstoff als Oxidationsmittel sicherzustellen.
Damit die Versorgung der Brennstoffzelle über ihre Querschnittsfläche gleichmäßig erfolgt, besitzt die Bipolarplatte ein Strömungsfeld, das aus einer Vielzahl von nebeneinanderliegenden Kanälen oder Rillen gebildet wird, durch die die Prozessgase entlang der Rillen zu den Reaktionszonen strömen und das entstehende Produktwasser abführen. Gleichzeitig verfügt die Bipolarplatte über von einander getrennte Löcher, über die der Wasserstoff als Brenngas, Luft/Sauerstoff als Oxidationsmittel und Wasser als Kühlmittel in die jeweiligen Strömungskanäle zugeführt werden.
An die Bipolarplatte werden komplexe technische Anforderungen gestellt, die darin bestehen, die Gase und den Strom mit geringem elektrischen Widerstand zu leiten, einen hohen Widerstand gegen aggressive chemische Bedingungen aufzuweisen, die entstehende Reaktionswärme abzuführen, korrosionsfest gegenüber Brenngas, Sauerstoff und Wasser zu sein, die Gase voneinander zu trennen, eine hohe Temperaturbeständigkeit und eine große mechanische Festigkeit, Formstabilität mit einem geringen Gewicht und ein kleines Volumen zu besitzen.

Es ist bekannt, für derartige Bipolarplatten dünne Metallfolien einzusetzen, die durch Prägen, Tiefziehen, Stanzen oder wirkmedienbasierte Umformverfahren, beispielsweise Hydroforming, in die gewünschte Form gebracht werden (DE 10 2005 021 487 A1, DE 10 2009 059 769, DE 10 2004 016 318 A1, DE 10 2009 036 039 A1).
Alle diese bekannten Lösungen haben den Nachteil, dass die geforderte Formgenauigkeit nicht sichergestellt werden kann. Dies führt dazu, dass ein Versatz in den Kanalgeometrien und der Löcher der Bipolarplatten entsteht, die zu sicherheitsrelevanten Fehlfunktionen der Brennstoffzelle führen können.

Thermische Verfahren (siehe DE 10 0210022094A1; erfordern wegen des entstehenden Grates regelmäßig kostenintensive Nachbearbeitungen.

Aus der DE 10 2010 020 178 A1 ist des Weiteren ein Verfahren zur Herstellung einer metallischen Bipolarplatte für einen Brennstoffzellenstapel bekannt, welche jeweils eine Gasverteilungsstruktur auf ihren beiden Seiten aufweist. Die Gasverteilungsstrukturen werden beidseitig gleichzeitig durch partielles Scherschneiden erzeugt.
Dieses bekannte Verfahren ist auf einen Dickenbereich von 0,5 bis 5 mm limitiert, so dass die Bipolarplatten ein erhebliches Gewicht und sehr große Abmessungen erreichen.

### Aufgabenstellung

Bei diesem Stand der Technik liegt der Erfindung die Aufgabe zugrunde, die Formgenauigkeit und Maßhaltigkeit der Bipolarplatten mittels Umformen auf einer Feinschneidpresse unter Wegfall von jeglicher Nacharbeit an den Konturen und Gewährleistung wirtschaftlicher Vorteile deutlich zu erhöhen.

Diese Aufgabe wird durch ein Verfahren der eingangs genannten Art mit den Merkmalen des Anspruches 1 und durch eine Vorrichtung mit den Merkmalen des Anspruches 10 gelöst.

Vorteilhafte Ausgestaltungen des Verfahrens und Vorrichtung sind den Unteransprüchen entnehmbar.

Das Wesentliche der erfindungsgemäßen Lösung besteht darin, die Umformoperation an der Metallfolie mit einer größtmöglichen Umformkraft in der Mitte einer Feinschneidpresse mittels einem mindestens dreistufigen Folgeverbund-Werkzeug durchzuführen, in dessen erster Stufe ein Zuschnitt im Band teilweises freigeschnitten, anschließend in einer zweiten Stufe mit einer Umformkraft von mindestens 2500 bis 3500 kN die Oberflächenstruktur in den Zuschnitt durch Druckumformen eingebracht, die Innenform, die Schlitze und die Referenzgeometrie durch ein Schneiden in und am Zuschnitt und sodann in einer dritten Stufe ein Schneiden der Außenkontur und Austragen des fertigen Zuschnitts für die Bipolarplatte nacheinander im Takt des Hubes durchgeführt wird.

Vorteilhaft ist, dass die Oberflächenstruktur durch eine Gesenkform im Werkzeug-Unterteil und eine adäquate Druckform im Werkzeug-Oberteil sowie die Innenform (Löcher) und Schlitze in der Bipolarplatte durch Schneid- und Lochstempel im Oberteil und in der Matrizenplatte des Unterteils angeordnete Matrizenöffnungen nacheinander, aber innerhalb der gleichen Operation erzeugt werden.
Dies gewährleistet, dass alle wichtigen Teilegeometrien eine bestmögliche Maßhaltigkeit zueinander erreichen und keine Sucherstifte mehr notwendig sind, um die Maßhaltigkeit der umgeformten zur geschnittenen Kontur sicherzustellen.
Von weiterem Vorteil ist, dass durch das Druckumformen unterschiedliche Oberflächenstrukturen, vorzugsweise ein Feld von Rillen, mäanderförmige oder spiralförmige Kanäle oder ein Noppenfeld in den Zuschnitt eingeformt werden können und Rillen oder Kanäle mit unterschiedlichen Querschnittsformen, beispielsweise u-, oval-, halbrund-, parabel- oder v-förmige Querschnitte, erzeugt werden, wodurch das erfindungsgemäße Verfahren sehr variabel in Bezug auf die Marktanforderungen der Plattenhersteller ist.

In einer bevorzugten Ausgestaltung des erfindungsgemäßen Verfahrens werden folgende weitere Maßnahmen ausgeführt:
a) Freischneiden der Stirn- und optional der Seitenränder des Zuschnitts für eine Bipolarplatte, wobei der Zuschnitt am Band angebunden bleibt,
b) Öffnen des Werkzeugs beim Rückhub der Umform-, Loch-und Schneidstempel und Zuführen des Bandes mit freigeschnittenem Zuschnitt zum Druckumformen, Lochen und Schneiden, wobei nach erneutem Klemmen des Bandes zunächst das Druckumformen der Oberflächenstruktur, nachfolgend das Lochen innerhalb des Zuschnitts und das Schneiden der Referenzgeometrie an der Außenform des Zuschnitts in vertikaler Abfolge innerhalb der zweiten Arbeitsstufe unter Beibehaltung der Anbindung des Zuschnitts am Band durchgeführt werden,
c) erneutes Öffnen des Werkzeugs beim Zurückfahren der Umform-, Schneide- und Lochstempel in den oberen Totpunkt und Zuführen des freigeschnitten, druckumgeformten, gelochten und geschnittenen Zuschnitts in die dritte Arbeitsstufe zum Schneiden der Außenkontur der Bipolarplatte, wobei der Zuschnitt vom zuvor geklemmten Band abgetrennt und nach einer Durchfallbewegung vertikal unterhalb der Schnittebene mittels eines Transportbandes aus dem geschlossenen Werkzeug ausgetragen wird.

Es hat sich für die elektrische Kontaktierung an den Bipolarplatten als zweckmäßig erwiesen, wenn während des Rückhubes von Umform-, Loch- und Schneidstempel innerhalb der zweiten Arbeitsstufe der Stirnrand des Zuschnitts durch einen im Oberteil vorgesehenen Biegestenpel zu einem vertikal in Richtung Oberteil aufragenden Schenkel umgeformt wird, wodurch die Formgenauigkeit und Maßhaltigkeit des Zuschnitts nicht beeinflusst wird, weil dieser noch im geklemmten Zustand verharrt.

Von besonderem Vorteil ist, dass zwischen der zweiten und dritten Arbeitsstufe optional eine weitere Arbeitsstufe in Form eines Leerhubes durchgeführt wird. Dies gewährleistet, dass sich die mit den erheblichen Umformkräfte einhergehenden Spannungszustände nicht im nachfolgenden Zuschnitt auswirken können, weil die aufeinanderfolgenden Zuschnitte im Band einen ausreichenden Abstand besitzen.

In weiterer Ausgestaltung des erfindungsgemäßen Verfahrens sind als Metallbandfolie Folien aus Edelstahl, vorzugsweise der Qualität 1.4404, X2CrNiMo18-14-3, Stahl, Aluminium, Aluminiumlegierungen, Titan, Titanlegierungen und Hastelloy-Legierungen mit einer Dicke von 0,1 bis 0,5 mm geeignet.
Natürlich gehört es auch zu der Erfindung, wenn Metall-Compound-Legierungen zum Einsatz kommen.

Für den Zusammenbau der erfindungsgemäß hergestellten Zuschnitte ist es besonders vorteilhaft, dass in die Außenform des Zuschnitts mehrere Referenzen geschnitten werden, welche eine exakte Ausrichtung und Lage der einzelnen Zuschnitte beim Fügen und der Montage sicherstellen.

Die erfindungsgemäße Vorrichtung zeichnet sich dadurch aus, dass das Folgeverbund-Werkzeug mindestens eine erste Stufe zum Leilweisen Freischneiden der Stirn- und optional der Seitenränder eines Zuschnitts für die Bipolarplatte, eine zweite Stufe zum Einformen der Oberflächenstruktur in den Zuschnitt, zum Lochen der Innenformen und Schneiden der Referenzgeometrien am freigeschnittenen, aber angebundenen Zuschnitt und eine dritte Stufe zum Schneiden der Außenkontur und Austragen der fertigen Bipolarplatte aus dem Werkzeug umfasst, wobei als Presse eine Feinschneidpresse mit gegeneinander auf das Werkzeug-Oberteil und Werkzeug-Unterteil hydraulisch wirkenden Ringzackenkolben und Gegenhalterkolben vorgesehen ist, die so aufeinander abgestimmt sind, dass in der zweiten Stufe mindestens eine Druckform zum Umformen gegenüber den Loch- und Schneidestempeln während der Hubbewegung letzteren voreilt.

In einer weiteren zweckmäßigen Ausgestaltung der erfindungsgemäßen Vorrichtung umfasst das Werkzeug-Unterteil mindestens eine in eine Fassung eingesetzte Gesenkform mit einer an die Form, Gestaltung und Lage der Oberflächenstruktur und Löcher in der Bipolarplatte angepassten Struktur sowie das Werkzeug-Oberteil mindestens eine an die Gesenkform entsprechend angepasste, in eine Führung eingesetzte Druckform mit adäquat ausgebildeter Oberflächenstruktur.

In weiterer Ausgestaltung der erfindungsgemäßen Vorrichtung umfasst die erste Stufe im Werkzeug-Unterteil mindestens erste und zweite in der Schneidmatrize (20) angeordnete Schneidöffnungen zum teilweisen Freischneiden des Zuschnitts und den Freischneidstempel, wobei der Schneidöffnung ein Abfallkanal zugeordnet ist, der zu einem unterhalb des Werkzeug-Unterteils angeordneten Transportband zum Austragen von Abfall aus dem Werkzeug führt.

Nach einer weiteren vorteilhaften Ausführungsform der erfindungsgemäßen Vorrichtung umfasst die zweite Stufe im Werkzeug-Unterteil mindestens eine in einer Fassung eingesetzte Gesenkform mit einer an die Form, Gestaltung und Lage der Oberflächenstruktur in der Bipolarplatte angepasste Oberflächenstruktur, mindestens eine in der Schneidmatrize angeordnete dritte und vierte Schneidöffnung für den Innenformstempel und den Schneidstempel sowie mindestens eine an die Gesenkform entsprechend angepasste, in einen Stempelführungseinsatz eingesetzte Druckform mit adäquat ausgebildeter Oberflächenstruktur und im Werkzeug-Oberteil mindestens die Innenform- und Schneidstempel, wobei den Schneidöffnungen je ein Abfallkanal zugeordnet ist, der zu einem unterhalb des Werkzeug-Unterteils angeordneten Transportband zum Austragen von Abfall aus dem Werkzeug führt.

In weiterer bevorzugter Ausgestaltung der erfindungsgemäßen Vorrichtung ist vorgesehen, dass die dritte Stufe im Werkzeug-Oberteil mindestens einen Außenkontur-Schneidstempel zum vollständigen Ausschneiden des Zuschnitts und mindestens eine in der Schneidmatrize angeordnete fünfte Schneidöffnung, wobei der Schneidöffnung ein Ausbringkanal zugeordnet ist, der zu einem unterhalb des Werkzeug-Unterteils angeordneten Transportband zum Ausbringen des fertigen Zuschnitts (Z) aus dem geschlossenen Werkzeug führt.

Nach einer bevorzugten Ausführungsvariante der erfindungsgemäßen Vorrichtung kann zwischen der zweiten und dritten Stufe eine weitere Stufe in Form einer Leerstufe eingefügt werden.

Mit besonderem Vorteil für die elektrische Kontaktierung ist es möglich, in die zweite Stufe mindestens ein Biegestempel im Werkzeug-Oberteil zum Biegen der Stirnränder des Zuschnitts zu integrieren. Dieser Biegestempel bewegt sich während des Rückhubes der Präge-, Loch- und Schneidstempel vertikal in Richtung Unterteil und formt somit den Stirnrand des Zuschnitts zu einem abragenden Schenkel um.

Die Gesenkform und die Druckform weist eine Oberflächenstruktur aus Rillen, mäander- und spiralförmigen Kanälen oder Noppen auf, so dass es ohne großen Aufwand möglich ist, die erfindungsgemäße Vorrichtung auf unterschiedliche Oberflächenstrukturen umzurüsten.
Damit sind auch die Rillen oder Kanäle der Oberflächenstrukturen auf verschiedene gewünschte Querschnittsformen, beispielsweise u-, oval-, halbrund-, parabel- oder v-förmige Querschnitte, einstellbar.
Ebenso ist es mit der erfindungsgemäßen Vorrichtung möglich, Metallbandfolien aus Edelstahl, vorzugsweise der Qualität 1.4404, X2CrNiMo18-14-3, Stahl, Aluminium, Aluminiumlegierungen, Titan, Titanlegierungen und Hastelloy-Legierungen mit einer Dicke von 0,1 bis 0,5 mm, vorzugsweise 0,1 mm einzusetzen.

Die erfindungsgemäße Lösung zeichnet sich dadurch aus, dass es möglich wird, anoden- und kathodenseitige Bipolarplatten mit hoher Formgenauigkeit und Maßhaltigkeit unter Wegfall von jeglicher Nacharbeit an den Konturen und Gewährleistung wirtschaftlicher Vorteile bereitzustellen.

Weitere Vorteile und Einzelheiten ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.

Es zeigen
Fig. 1 eine Ansicht einer Bipolarplatte mit Oberflächenstruktur, Innenformen und Referenzgeometrien nach dem Stand der Technik,
Fig. 2 einen Schnitt A-A gemäß Fig. 2,
Fig. 3 eine Schnittdarstellung der erfindungsgemäßen Vorrichtung im geöffneten Zustand,
Fig. 4 eine schematische Darstellung des Ablaufs des erfindungsgemäßen Verfahrens,
Fig. 5 eine perspektivische Ansicht der Gesenkform zum Einformen der Oberflächenstruktur
Fig. 6 eine perspektivische Ansicht der Druckform für das Einformen der Oberflächenstruktur
Fig. 8 Ansichten für verschiedene Oberflächenstrukturen, die mit dem erfindungsgemäßen in den Zuschnitt für eine Bipolarplatte eingeformt werden können.

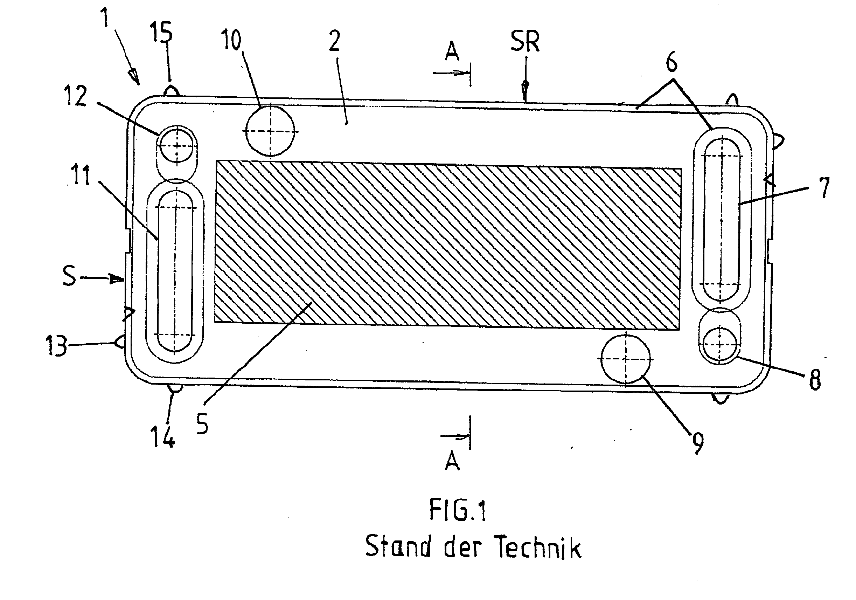

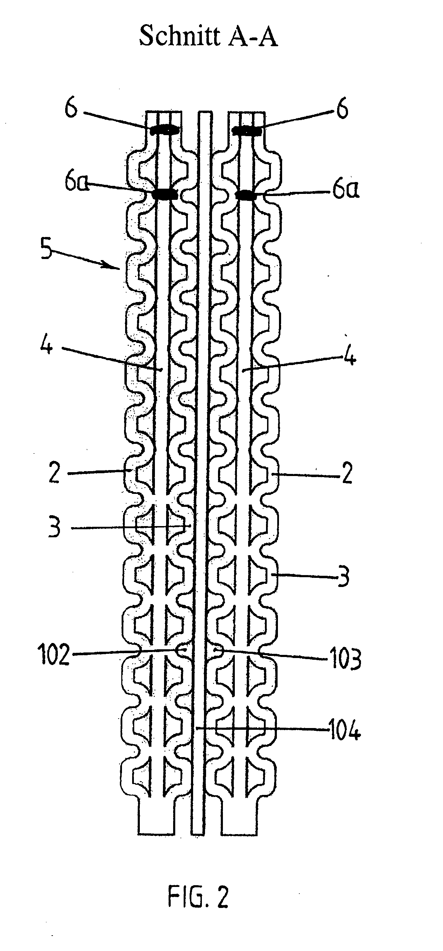

Die Fig. 1 und 2 zeigen ein Beispiel einer metallischen mehrlagigen Bipolarplatte 1 nach dem Stand der Technik. Diese bekannte Bipolarplatte besteht aus einer ersten Platte 2, einer zweiten Platte 3 und einer zwischen der ersten und zweiten Platte 2 bzw. 3 eingefügten Zwischenplatte 4. In die Platten 2 und 3 ist in Längsrichtung der Platten eine Oberflächenstruktur 5, beispielsweise in Form von Kanälen oder Rillen, eingebracht, so dass die eine Seite der Zwischenplatte 4 mit der ersten Platte 2 ein sogenanntes Strömungsfeld (Flowfield) für ein Kühlmedium 101 und die andere Seite der Zwischenplatte 4 mit der zweiten Platte 3 eine weiteres Flowfield für ein Kühlmedium 101 bildet. Die Strömungsfelder (Flowfield) 102 und 103 ermöglichen, die Reaktanten (Wasserstoff, Luft/ Luftsauerstoff) links und rechts einer protonenleitenden Membran 104 gleichmäßig zu verteilen. Der Zusammenhalt der Bipolarplatte 1 und die Minimierung des elektrischen Widerstandes werden durch Schweißnähte 6a erreicht.
Die Platten 2, 3 und 4 sind an ihren Stirn- und Seitenrändern S und SR umlaufend mit einer Schweißnaht 6 flüssigkeitsdicht verbunden.

Im Stirnbereich S und teilweise am Seitenrändern SR haben die Platten 2 bzw. 3 eine Zuführöffnung 7 für Wasserstoff, eine Zuführöffnung 8 für Luft/Sauerstoff und eine Zuführöffnung 9 für das Kühlmedium sowie entsprechende Abführöffnungen 10, 11 und 12 für das Kühlmedium und der Reaktionsprodukte.
In beide Stirnbereichen S der Bipolarplatte 11 sind Referenzgeometrien 13, 14, und 15 eingebracht. Durch Referenzgeometrien 13, 14 und 15 soll erreicht werden, dass umformbedingte Formtoleranzen beim nachfolgenden Zusammenbau ausgeglichen werden und insbesondere der Versatz der Einzellagen einer Bipolarplatte minimiert wird.

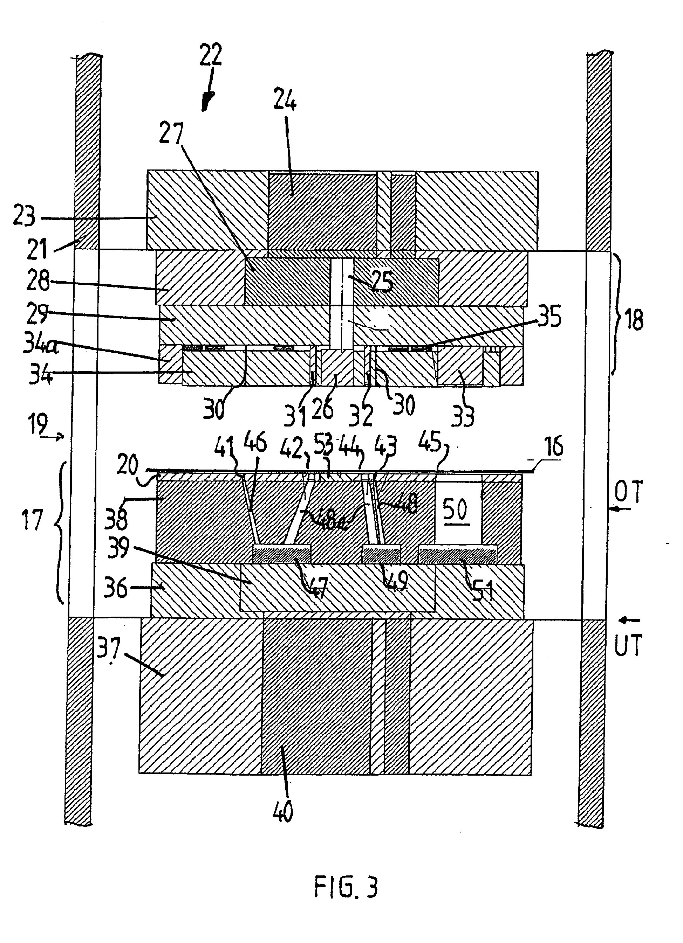

In der Fig. 3 ist die erfindungsgemäße Vorrichtung schematisch dargestellt. Die auf ein nichtgezeigtes Coil aufgewickelte Metallbandfolie 16 aus dem Werkstoff 1.4404 oder X2CrNiMo18-14-3 mit einer Dicke von 0,1 wird zwischen Werkzeug-Unterteil 17 und Werkzeug-Oberteil 18 in das geöffnete Werkzeug 19 zugeführt. Die Metallbandfolie 16 liegt auf der Schneidmatrize 20 des Werkzeug-Unterteils 17 flächig auf.
Das Werkzeug-Oberteil 18 ist am oberen, vom Pressenständer 21 einer Feinschneidpresse 22 gehaltenen Pressentisch 23 unverrückbar festgelegt. Im Pressentisch 23 ist der von der Ringzackenhydraulik der Feinschneidpresse 22 betätigbare Ringzackenkolben 24 geführt, der über den Druckbolzen 25 auf die Druckform 26 eines Gesenkes wirkt. Der Druckbolzen 25 ist in einer Halteplatte 27, welche von einer oberen Werkzeugwechselplatte 28 aufgenommen ist, und einem oberen Untersatz 29 axial verschiebbar, so dass sichergestellt ist, dass die Umformkräfte ohne Kippmoment auf die Druckform 26 übertragen werden können.
Die weiteren Aktivelemente wie der Freischneidstempel 30 zum teilweisen Freischneiden eines Zuschnitts Z aus der Metallbandfolie 16, der Innenformstempel 31 zum Lochen der Innenformen (Zuführöffnungen 7, 8, 9 und Abführöffnungen 10, 11, 12, der Schneidstempel 32 zum Schneiden der Referenzgeometrien 13, 14 und 15 sowie der Außenkontur-Schneidstempel 33 stehen auf einem oberen Untersatz 29 fest. Freischneidstempel 30, Innenformstempel 31, Schneidstempel 32 und Außenkontur-Schneidstempel 33 sind in einem Stempelführungseinsatz 34 geführt, welcher in einer Führungseinfassung 34a einliegt.
Zwischen Stempelführungseinsatz 34 und dem oberen Untersatz 29 befinden sich Federelemente 35, um die Metallbandfolie 16 zu klemmen und den Schneidweg für die Aktivelemente 30, 31, 32 und 33 zu ermöglichen.

Das Werkzeug-Unterteil 17 besitzt eine untere Wechselplatte 36, welche direkt mit dem Pressenstößel 37 der Feinschneidpresse 22 verbunden ist, der eine Hubbewegung vom unteren Totpunkt UT und oberen Totpunkt OT ausführt. An der unteren Wechselplatte 36 ist der untere Untersatz 38 befestigt, in dem eine untere Druckplatte 39 aufgenommen ist, gegen die der Gegenhalterkolben 38 der Gegenhalterhydraulik arbeitet.
Auf dem unteren Untersatz 38 befindet sich die Schneidmatrize 20 mit einer ersten und zweiten Schneidöffnung 41 bzw. 43 für die Freischneidstempel 30, einer dritten Schneidöffnung 42 für den Innenformstempel 31, einer vierten Schneidöffnung 44 für die Referenzgeometrie und eine fünfte Schneidöffnung 45 für den Außenkontur-Schneidstempel 33. Den Schneidöffnungen 41 und 42 ist jeweils ein Abführkanal 46 zugeordnet, der sich durch den unteren Untersatz 38 erstreckt und bis zu einem unterhalb der Schneidöffnungen 41 und 42 angeordneten gemeinsamen Transportband 47 geführt ist. Dadurch ist es möglich, Schneidabfälle auch bei geschlossenem Werkzeug problemlos abzuführen.
Ebenso sind den Schneidöffnungen 43 und 44 je ein Abführkanal 48 zugeordnet, durch den die Schneidabfälle auf ein gemeinsames Transportband 49 abgeführt werden. Unter der Schneidöffnung 45 befindet sich durch den unteren Untersatz 38 vertikal verlaufend ein Abführkanal 50 zum Abführen der fertigen Zuschnitte Z auf ein weiteres Transportband 51. Weiterhin ist am unteren Untersatz 38 in einer Fassung 52 eine Gesenkform 53 angeordnet, die auf die zum Werkzeug-Oberteil 18 gehörende Druckform 26 zum Umformen abgestimmt ist.

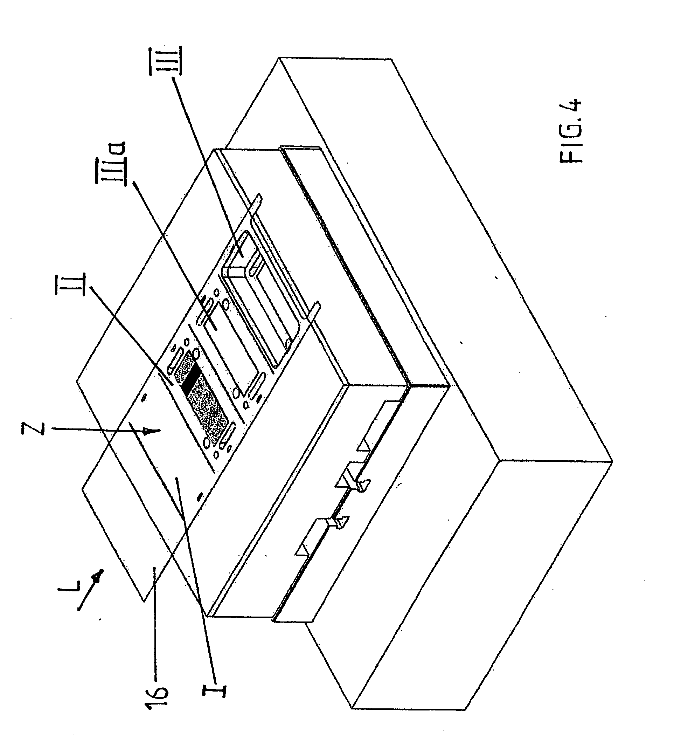

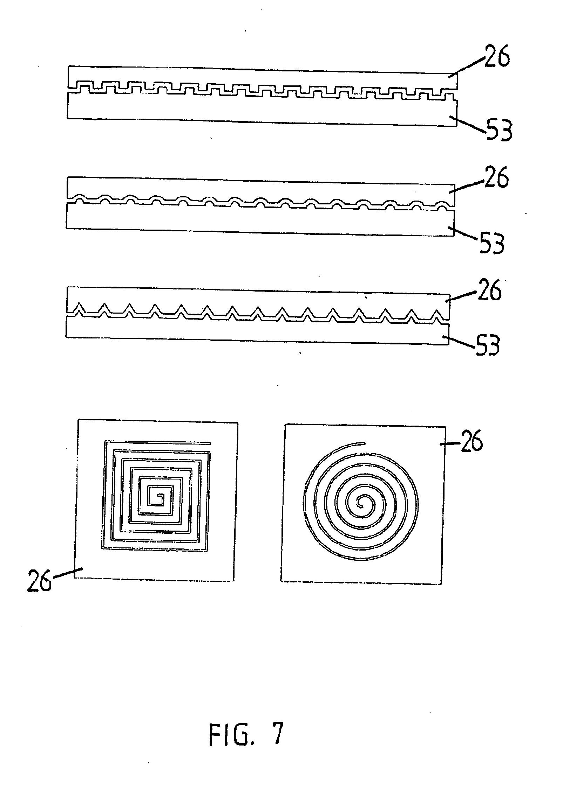

Der Ablauf des erfindungsgemäßen Verfahrens wird nachfolgend unter Bezugnahme auf die Fig. 4 in Verbindung mit der Fig. 3 näher erläutert. In der Fig. 4 ist der Übersichtlichkeit halber nur das Werkzeugunterteil 17 mit in Laufrichtung L zugeführter Metallbandfolie 16 gezeigt.
Die erfindungsgemäße Vorrichtung zum Ausführen des erfindungsgemäßen Verfahrens besteht in diesem Beispiel aus vier Stufen und zwar einer ersten Stufe I zum teilweisen Freischneiden der Stirn- und Seitenränder S bzw. SR des Zuschnitts Z für die Bipolarplatte 1, eine zweite Stufe II zum Einformen der Oberflächenstruktur 5 in den Zuschnitt Z, zum Lochen der Zuführöffnungen 7, 8, 9 und Abführöffnungen 10, 11, 12 und Schneiden der Referenzgeometrien 13, 14 und 15 in den freigeschnittenen Zuschnitt Z, eine zusätzliche Stufe IIIa als Leerstufe und eine Stufe III zum Schneiden der Außenkontur und Austragen des fertigen Zuschnitt Z aus dem Werkzeug. Als Presse wird eine Feinschneidpresse 22 mit gegeneinander auf das Werkzeug-Oberteil 18 und Werkzeug-Unterteil 17 hydraulisch wirkenden Ringzackenkolben 24 und Gegenhalterkolben 40 eingesetzt.
Die Metallbandfolie 16 ist vor Beginn der Operationen zwischen dem Stempelführungseinsatz 34 des Werkzeug-Oberteils 18 und der Schneidmatrize 20 des Werkzeug-Unterteils 17 geklemmt. Mittels der Freischneidestempel 30 wird der Zuschnitt Z an den entsprechenden Schneidöffnungen 41 bzw. 42 in der Schneidmatrize 20 teilweise an den Stirnrändern S und den Seitenrändern SR in der ersten Stufe I freigeschnitten. Die übrigen Bereiche des Zuschnitts Z bleiben an der Metallbandfolie 16 angebunden. Das Werkzeug öffnet beim Rückhub der Aktivelemente und gibt die geklemmte Metallbandfolie 16 frei. Ein nicht dargestellter Vorschub verschiebt die Metallbandfolie 16 mit angebundenem Zuschnitt Z in die Stufe II, wo die Metallbandfolie 16 beim Schließen des Werkzeugs erneut geklemmt wird.
Die Ringzackenhydraulik ist so abgestimmt, dass die Druckform 26 gegenüber dem Loch- und Schneidestempel 31 bzw. 32 während ihrer Hubbewegung letzterem voreilt. Dies ermöglicht, das Umformen und Schneiden in vertikaler Abfolge innerhalb der Stufe II nacheinander durchführen, wobei der Zuschnitt Z an der Metallbandfolie 16 weiterhin angebunden bleibt.
Die Druckform 26 und die Gesenkform 53 sind mit einer aufeinander abgestimmten Oberflächenstruktur versehen, die der gewünschten Oberflächenstruktur 5 im Strömungsfeld der Bipolarplatte 1 entspricht (siehe Fig. 7).
Die Umformkraft für das Einformen der Oberflächenstruktur in den angebundenen Zuschnitt Z liegt bei mindestens 2500 bis 3500 kN, so dass gewährleistet ist, dass das gesamte Strömungsfeld eine gleichmäßige Struktur erhält.
Nachdem das Umformen, Lochen und Schneiden in der Stufe II abgeschlossen ist, führen die Aktivelemente wiederum einen Rückhub aus und das Werkzeug öffnet.
Die Metallbandfolie 16 mit angebundenem umgeformtem und geschnittenem Zuschnitt Z kann durch den Vorschub in die Stufe III verschoben werden, in der lediglich ein Leerhub ausgeführt wird. Dies gewährleistet, dass ein ausreichender Abstand zwischen den einzelnen Zuschnitten Z entsteht und ein Übergreifen von unerwünschten Spannungszuständen infolge der erheblichen Umformkräfte in den nachfolgenden Zuschnitt ausgeschlossen wird.
Nach erneutem Öffnen des Werkzeugs verschiebt der Vorschub die Metallbandfolie 16 mit angebundenem Zuschnitt Z in die Stufe III. Das Band und Zuschnitt Z werden geklemmt. Der Außenform-Schneidstempel 33 trennt den Zuschnitt 7 an der Schneidöffnung 45 vollständig von der Metallbandfolie 16. Der fertige Zuschnitt Z fällt anschließend durch den Ausbringkanal 50 auf das Transportband 51, das den Zuschnitt aus dem Werkzeug befördert.

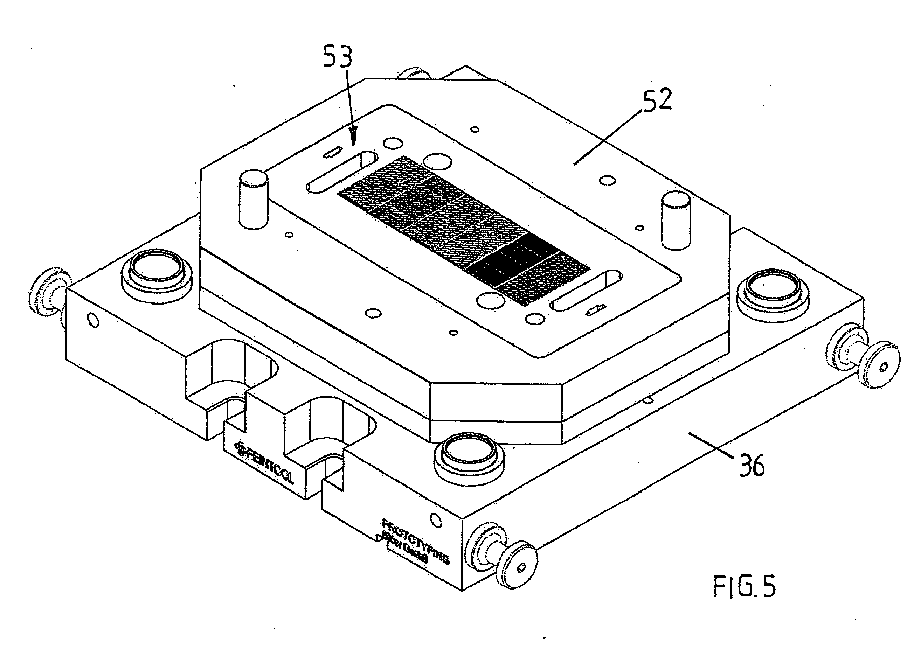

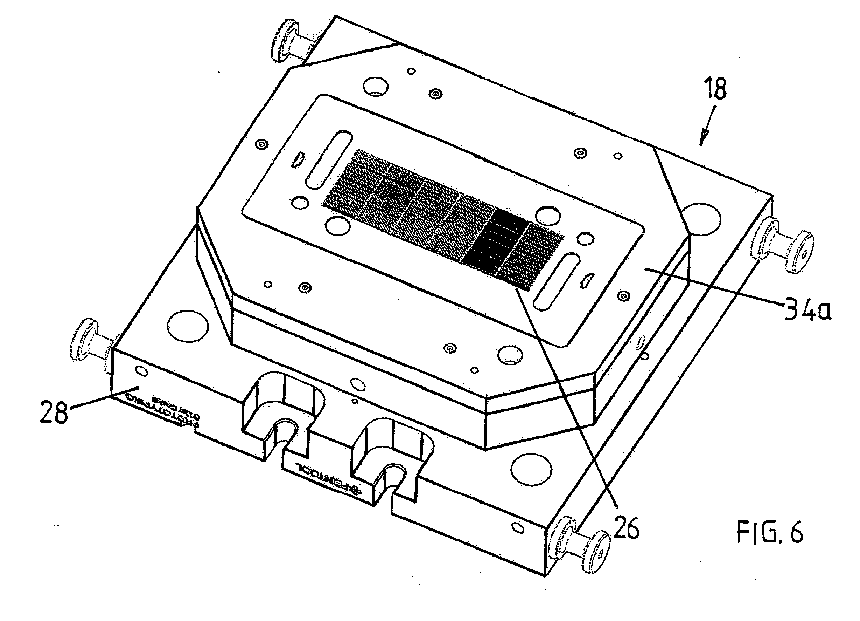

Die Fig. 5 und 6 zeigen die Gesenkform 53, die an der unteren Wechselplatte 36 des Werkzeug-Unterteils befestigt ist, und und die Druckform 26, die im Stempelführungseinsatz 34 des Werkzeug-Oberteils aufgenommen ist.

Die Fig. 7 zeigt mögliche Oberflächenstrukturen für die Druck- und Gesenkform 26 bzw. 53, die als austauschbare Einheiten für unterschiedliche Oberflächenstrukturen vorgehalten werden können.
Mit dem erfindungsgemäßen Verfahren lassen sich problemlos anoden- und kathodenseitige Platten sowie Zwischenplatten für Bipolarplatten mit hoher Maßhaltigkeit und Effektivität wirtschaftlich herstellen.

### Bezugszeichenliste

### Bipolarplatte nach dem Stand der Technik 1

- Platten von 1: 2, 3
- Zwischenplatte von 1: 4
- Oberflächenstruktur von 2, 3: 5
- Schweißnaht: 6
- Zuführöffnungen in 1: 7, 8, 9
- Abführöffnungen in 1: 10, 11, 12
- Referenzgeometrien: 13, 14, 15
- Metallbandfolie: 16
- Werkzeug-Unterteil: 17
- Werkzeug-Oberteil: 18
- Werkzeug: 19
- Schneidmatrize: 20
- Pressenständer: 21
- Feinschneidpresse: 22
- Pressentisch von 22: 23
- Ringzackenkolben: 24
- Druckbolzen: 25
- Druckform zum Umformen: 26
- Halteplatte: 27
- Obere Werkzeugwechselplatte: 28
- Oberer Untersatz: 29
- Freischneidstempel: 30
- Innenformstempel: 31
- Schneidstempel für Referenzgeometrie: 32
- Außenkontur-Schneidstempel: 33
- Stempelführungseinsatz: 34
- Führungseinfassung: 34a
- Federelemente: 35
- Untere Wechselplatte: 36
- Pressenstößel: 37
- Unterer Untersatz: 38
- Druckplatte: 39
- Gegenhalterkolben: 40
- Erste Schneidöffnung: 41
- Zweite Schneidöffnung: 42
- Dritte Schneidöffnung: 43
- Vierte Schneidöffnung: 44
- Fünfte Schneidöffnung: 45
- Abführkanal: 46, 48, 48a,50
- Transportband: 47, 49, 51
- Fassung für Gesenkform: 52
- Gesenkform: 53
- Kühlmedium: 101
- Strömungsfeld (Flow Field): 102, 103
- Membran: 104
- Laufrichtung der Metallbandfolie 16: L
- Oberer Totpunkt: OT
- Unterer Totpunkt: UT
- Zuschnitt: Z
- Arbeitsstufen: I, II, III, IIIa

## Patentansprüche

1. Verfahren zum Herstellen einer aus Metallbandfolie bestehenden Bipolarplatte mit einer Oberflächenstruktur für das Strömungsfeld, Innenformen wie Löcher und Schlitze in der Platte sowie einer Referenzgeometrie an ihrer Außenform, bei dem das Band einem im unteren Totpunkt des Stößels einer Presse öffnenden und oberen Totpunkt des Stößels der Presse schließenden Werkzeug zugeführt, zwischen einem aus mindestens einem Umformstempel, Schneid- und Lochstempel und einer Führung zusammengesetzten, am Pressentisch festgelegten Werkzeugoberteil und mindestens einem eine Schneidmatrize enthaltenden, einen Hub zwischen oberen und unteren Totpunkt ausführenden Werkzeug-Unterteil beim Schließen geklemmt und anschließend einer Schneid- und Umformoperation unterworfen wird, **dadurch gekennzeichnet, dass** als Presse eine hydraulische Feinschneidpresse mit einem mindestens dreistufigen Folgeverbund-Werkzeug eingesetzt wird, in dessen erster Stufe ein Zuschnitt im Band teilweises freigeschnitten, anschließend in einer zweiten Stufe mit einer Umformkraft von mindestens 2500 bis 3500 kN die Oberflächenstruktur in den Zuschnitt durch Druckumformen eingebracht, die Innenform, die Schlitze und die Referenzgeometrie durch ein Schneiden in und am Zuschnitt und sodann in einer dritten Stufe ein Schneiden der Außenkontur und Austragen des fertigen Zuschnitts für die Bipolarplatte nacheinander im Takt des Hubes durchgeführt wird.

2. Verfahren nach Anspruch 1, **dadurch gekennzeichnet, dass** die Oberflächenstruktur durch eine Gesenkform im Werkzeug-Unterteil und eine adäquate Druckform im Werkzeug-Oberteil sowie die Innenform (Löcher) und Schlitze in der Bipolarplatte durch die Schneid- und Lochstempel im Werkzeug-Oberteil und die Schneidmatrize im Werkzeug-Unterteil nacheinander innerhalb der gleichen Operation erzeugt werden.

3. Verfahren nach Anspruch 1 oder 2, **dadurch gekennzeichnet, dass** durch das Druckumformen unterschiedliche Oberflächenstrukturen, vorzugsweise ein Feld von Rillen, mäanderförmige oder spiralförmige Kanäle oder ein Noppenfeld in den Zuschnitt eingeformt werden.

4. Verfahren nach Anspruch 3, **dadurch gekennzeichnet, dass** Rillen oder Kanäle mit unterschiedlichen Querschnittsformen, beispielsweise u-, oval-, halbrund-, parabel- oder v-förmige Querschnitte, erzeugt werden.

5. Verfahren nach Anspruch 1, **gekennzeichnet durch** folgende weitere Merkmale:
a) Freischneiden der Stirn- und optional der Seitenränder des Zuschnitts für eine Bipolarplatte, wobei der Zuschnitt am Band angebunden bleibt,
b) Öffnen des Werkzeugs beim Rückhub der Umform-, Loch-und Schneidstempel und Zuführen des Bandes mit freigeschnittenem Zuschnitt zum Druckumformen, Lochen und Schneiden, wobei nach erneutem Klemmen des Bandes zunächst das Druckumformen der Oberflächenstruktur, nachfolgend das Lochen innerhalb des Zuschnitts und das Schneiden der Referenzgeometrie an der Außenform des Zuschnitts in vertikaler Abfolge innerhalb der zweiten Arbeitsstufe unter Beibehaltung der Anbindung des Zuschnitts an das Band durchgeführt werden,
c) Erneutes Öffnen des Werkzeugs beim Zurückfahren der Umform-, Schneide- und Lochstempel in den oberen Totpunkt und Zuführen des freigeschnitten, druckumgeformten, gelochten und geschnittenen Zuschnitts in die dritten Arbeitsstufe zum Schneiden der Außenkontur der Bipolarplatte, wobei der Zuschnitt vom zuvor geklemmten Band abgetrennt und nach einer Durchfallbewegung vertikal unterhalb der Schnittebene mittels eines Transportbandes aus dem geschlossenen Werkzeug ausgetragen wird.

6. Verfahren nach Anspruch 5, **dadurch gekennzeichnet, dass** während des Rückhubes von Umform-, Loch- und Schneidstempel innerhalb der zweiten Arbeitsstufe der Stirnrand des Zuschnitts durch einen im Unterteil vorgesehenen durch den Stößel der Feinschneidpresse angetriebenen Biegestempel zu einem vertikal in Richtung Oberteil aufragenden Schenkel umgeformt wird.

7. Verfahren nach Anspruch 1, **dadurch gekennzeichnet, dass** zwischen der zweiten und dritten Arbeitsstufe optional ein weitere Arbeitsstufe in Form eines Leerhubes durchgeführt wird.

8. Verfahren nach Anspruch 1, **dadurch gekennzeichnet, dass** als Metallbandfolie Folien aus Edelstahl, vorzugsweise der Qualität 1.4404 oder X2CrNiMo18-14-3, Stahl, Aluminium, Aluminiumlegierungen, Titan, Titanlegierungen und Hastelloy-Legierungen mit einer Dicke von 0,1 bis 0,5 mm, vorzugsweise 0,1 mm verwendet werden.

9. Verfahren nach Anspruch 1, **dadurch gekennzeichnet, dass** als Referenzgeometrien mehrere Referenzen in die Außenform des Zuschnitts geschnitten werden.

10. Vorrichtung zum Herstellen einer aus einer Metallbandfolie bestehenden Bipolarplatte mit einer Oberflächenstruktur (5) für das Strömungsfeld, Innenformen (7,8,9,10,11,12) wie Löcher und Schlitze in der Platte (1) sowie einer Referenzgeometrie (14,15,16) an ihrer Außenform zur Durchführung des Verfahrens nach Anspruch 1, mit durch einen Stößel (37) einer Presse angetriebenen Folgeverbund-Werkzeug (19), dessen am Pressentisch (23) festgelegtes Werkzeug-Oberteil (18) mindestens einen Loch- und Schneidstempel (31,32) sowie eine Führungseinfassung (34) und dessen einen Hub zwischen oberen und unteren Totpunkt des Stößels (37) ausführendes Werkzeug-Unterteil (17) mindestens eine Schneidmatrize (20) enthält, **dadurch gekennzeichnet, dass** das Folgeverbund-Werkzeug mindestens eine erste Stufe (1) zum teilweisen Freischneiden der Stirn- und optional der Seitenränder (S;SR) eines Zuschnitts (Z) für die Bipolarplatte (1), eine zweite Stufe (II) zum Einformen der Oberflächenstruktur (5) in den Zuschnitt (Z), zum Lochen der Innenformen ((7,8,9,10,11,12) und Schneiden der Referenzgeometrien (4,15,16) am freigeschnittenen Zuschnitt (Z) und eine dritte Stufe (III) zum Schneiden der Außenkontur und Austragen der fertigen Bipolarplatte (1) aus dem Werkzeug (19) umfasst, wobei als Presse eine Feinschneidpresse (22) mit gegeneinander auf das Werkzeug-Oberteil (18) und Werkzeug-Unterteil (17) hydraulisch wirkenden Ringzackenkolben (24) und Gegenhalterkolben (40) vorgesehen ist, die so aufeinander abgestimmt sind, dass in der zweiten Stufe (II) mindestens eine Druckform (26) zum Umformen gegenüber den Loch- und Schneidestempeln (31,32) während der Hubbewegung letzteren voreilt.

11. Vorrichtung nach Anspruch 10, **dadurch gekennzeichnet, dass** die erste Stufe (I) im Werkzeug-Unterteil (17) mindestens erste und zweite in der Schneidmatrize (20) angeordnete Schneidöffnungen (41, 43) zum teilweisen Freischneiden des Zuschnitts (Z) und im Werkzeug-Oberteil (18) den Freischneidstempel (30) umfasst, wobei der Schneidöffnung (41, 43) ein Abfallkanal (46, 48) zugeordnet ist, der zu einem unterhalb des Werkzeug-Unterteils (17) angeordneten Transportband (47 bzw. 49) zum Austragen von Abfall aus dem Werkzeug (19) führt.

12. Vorrichtung nach Anspruch 10, **dadurch gekennzeichnet, dass** die zweite Stufe (II) im Werkzeug-Unterteil (17) mindestens eine in einer Fassung (52) eingesetzte Gesenkform (53) mit einer an die Form, Gestaltung und Lage der Oberflächenstruktur (5) in der Bipolarplatte (1) angepasste Oberflächenstruktur, mindestens eine in der Schneidmatrize (20) angeordnete dritte und vierte Schneidöffnung (42,44) für den Innenformstempel (31) und den Schneidstempel (32) sowie mindestens eine an die Gesenkform (53) entsprechend angepasste, in einen Stempelführungseinsatz (34) eingesetzte Druckform (26) mit adäquat ausgebildeter Oberflächenstruktur und im Werkzeug-Oberteil (18) mindestens die Innenform- und Schneidstempel (31,32) umfasst, wobei den Schneidöffnungen (42, 44 je ein Abfallkanal (48a) zugeordnet ist, der zu einem unterhalb des Werkzeug-Unterteils (17) angeordneten Transportband (47 bzw. 49) zum Austragen von Abfall aus dem Werkzeug führt.

13. Vorrichtung nach Anspruch 10, **dadurch gekennzeichnet, dass** die dritte Stufe (III) im Werkzeug-Oberteil (18) mindestens einen Außenkontur-Schneidstempel (33) zum vollständigen Ausschneiden des Zuschnitts (Z) und mindestens eine in der Schneidmatrize (20) angeordnete fünfte Schneidöffnung (45) umfasst, wobei der Schneidöffnung (45) ein Ausbringkanal (50) zugeordnet ist, der zu einem unterhalb des Werkzeug-Unterteils (17) angeordneten Transportband (519 ) zum Ausbringen des fertigen Zuschnitts (Z) aus dem geschlossenen Werkzeug (19) führt.

14. Vorrichtung nach Anspruch 10, **dadurch gekennzeichnet, dass** zwischen der zweiten und dritten Stufe (II, III) optional ein weitere Stufe (IIIa) in Form eines Leerhubes vorgesehen ist.

15. Vorrichtung nach Anspruch 8, **dadurch gekennzeichnet, dass** das Werkzeug-Oberteil (18) für die zweite Stufe (II) mindestens einen Biegestempel zum Biegen der Stirnränder des Zuschnitts (Z) aufweist.

16. Vorrichtung nach Anspruch 10, **dadurch gekennzeichnet, dass** die Gesenkform (53) und die Druckform (26) eine Oberflächenstruktur aus Rillen oder mäander- oder spiralförmigen Kanälen oder Noppen aufweist.

17. Vorrichtung nach Anspruch 16, **dadurch gekennzeichnet, dass** die Rillen oder Kanäle unterschiedliche Querschnittsformen, beispielsweise u-, oval-, halbrund-, parabel- oder v-förmige Querschnitte, besitzen.

18. Vorrichtung nach Anspruch 10, **dadurch gekennzeichnet, dass** die Metallbandfolie aus Edelstahl, vorzugsweise der Qualität 1.4404 oder X2CrNiMo18-14-3, Stahl, Aluminium, Aluminiumlegierungen, Titan, Titanlegierungen und Hastelloy-Legierungen mit einer Dicke von 0,1 bis 0,5 mm, vorzugsweise 0,1 mm besteht.

19. Vorrichtung nach Anspruch 10, **dadurch gekennzeichnet, dass** der Zuschnitt (Z) mehrere Referenzgeometrien aufweist.

## Claims

1. A method for producing a bipolar plate comprising a metal-foil strip having a surface structure for a flow field, inner forms such as holes and slots in the plate, and a reference geometry on the outer form thereof, in which the strip is fed to a tool, which opens at the lower dead-center position of the ram of a press and closes at the upper dead-center position of the ram of the press, is clamped between an upper tool part, which comprises at least a forming punch, a cutting and piercing punch and a guide and is mounted on the press table, and at least one lower tool part that includes a cutting die and performs a stroke between the upper and lower dead-center positions upon closing, the strip finally being subjected to a cutting and forming operation, **characterized in that** the press that is used is a hydraulic fine-blanking press having an at least three-stage progressive die, in the first stage of which a blank is cut partially free in the strip, and subsequently, in a second stage, the surface structure is formed in the blank via compression-forming using a forming force of at least 2500 to 3500 kN, the inner form, the slots and the reference geometry are formed by way of cutting in, and on, the blank, and then, in a third stage, cutting of the outer contour and removal of the finished blank for the bipolar plate are carried out successively in the stroke cycle.

2. The method according to claim 1, **characterized in that**, successively within the same operation, the surface structure is created by a forging die in the lower tool part and a suitable chasing form in the upper tool part, and the inner form (holes) and slots in the bipolar plate are created via the cutting and piercing punch in the upper tool part and the cutting die in the lower tool part.

3. The method according to claim 1 or 2, **characterized in that** different surface structures, and preferably a field of grooves, meander-shaped or spiral channels or a knob field, are formed in the blank via compression-forming.

4. The method according to claim 3, **characterized in that** grooves or channels having different cross-sectional shapes, for example, u-, oval-, semicircular-, parabolic- or v-shaped cross sections, are formed.

5. The method according to claim 1, **characterized by** the following further features:
a) free-cutting the end-face edges and, optionally, the lateral edges of the blank for a bipolar plate, wherein the blank remains connected to the strip,
b) opening the tool upon the return stroke of the forming, piercing and cutting punch and advancing the strip comprising the free-cut blank for compression-forming, piercing and cutting, wherein, after the strip has been clamped once more, the compression-forming of the surface structure is carried out first, followed by piercing within the blank and cutting the reference geometry on the outer form of the blank in a vertical sequence within the second working stage while retaining the connection of the blank to the strip,
c) re-opening the tool upon retraction of the forming, cutting and piercing punch to the top dead-center position and advancing the free-cut, compression-formed, pierced and cut blank to the third working stage for cutting the outer contour of the bipolar plate, wherein the blank is separated from the previously clamped strip and, after a fall-through motion, is removed from the closed tool vertically below the cutting plane by way of a conveyor belt.

6. The method according to claim 5, **characterized in that**, during the return stroke of the forming, piercing and cutting punch within the second working stage, the end-face edge of the blank is formed via a bending punch, which is provided in the lower part and driven by the ram of the fine-blanking press, into a leg projecting vertically in the direction of the upper part.

7. The method according to claim 1, **characterized in that** a further working stage in the form of a no-load stroke is optionally carried out between the second and third working stages.

8. The method according to claim 1, **characterized in that** foils made of stainless steel, preferably of the quality 1.4404, X2CrNiMo18-14-3, steel, aluminum, aluminum alloys, titanium, titanium alloys and Hastelloy alloys having a thickness of 0.1 to 0.5 mm, preferably 0.1 mm, are used as metal-foil strip.

9. The method according to claim 1, **characterized in that** a plurality of references are cut into the outer form of the blank as reference geometries.

10. A device for producing a bipolar plate comprising a metal-foil strip and having a surface structure (5) for a flow field, inner forms (7, 8, 9, 10, 11, 12) and holes and slots in the plate (1) and a reference geometry (14, 15, 16) on the outer form thereof, for carrying out the method according to claim 1, the device comprising a progressive die (19) driven by a ram (37) of a press, the upper tool part (18) thereof, which is mounted on the press table (23), including at least one piercing and cutting punch (31, 32) and a guide holder (34), and the lower tool part (17) thereof, which performs a stroke between the upper and lower dead-center positions of the ram (37), including at least one cutting die (20), **characterized in that** the progressive die comprises at least one first stage (1) for partially free-cutting the end-face and, optionally, lateral edges (S; SR) of a blank (Z) for the bipolar plate (1), a second stage (II) for forming the surface structure (5) in the blank (Z), piercing the inner forms (7, 8, 9, 10, 11, 12) and cutting the reference geometries (4, 15, 16) on the free-cut blank (Z) and a third stage (III) for cutting the outer contour and removing the finished bipolar plate (1) from the tool (19), wherein a fine-blanking press (22) having a knife-edged ring piston (24) and a counterholder piston (40) acting hydraulically in opposition on the upper tool part (18) and the lower tool part (17) is provided as the press, the knife-edged ring piston and counterholder piston being coordinated with one another such that, in the second stage (II), at least one chasing form (26) for forming precedes the piercing and cutting punches (31, 32) during the reciprocating motion thereof.

11. The device according to claim 10, **characterized in that** the first stage (I), the lower tool part (17) comprises at least first and second cutting openings (41, 43) disposed in the cutting die (20) for partially free-cutting the blank (Z), and the upper tool part (18) comprises a free-cutting punch (30), wherein a waste channel (46, 48) is dedicated to the cutting opening (41, 43) that leads to a conveyor belt (47 and 49, respectively) disposed underneath the lower tool part (17) for removing waste from the tool (19).

12. The device according to claim 10, **characterized in that**, in the second stage (II), the lower tool part (17) comprises at least one forging die (53) inserted in a holder (52) that has a surface structure adapted to the shape, configuration and position of the surface structure (5) in the bipolar plate (1), at least one third and fourth cutting opening (42, 44) for the inner-form punch (31) and the cutting punch (32) disposed in the cutting die (20), and at least one chasing form (26) having an suitably formed surface structure and which is correspondingly adapted to the forging die (53) and is inserted into a punch-guiding insert (34), and comprises at least the inner-form and cutting punch (31, 32) in the upper tool part (18), wherein a waste channel (48a) is dedicated to each cutting opening (42, 44), which leads to a conveyor belt (47 and 49, respectively) disposed underneath the lower tool part (17) for removing waste from the tool.

13. The device according to claim 10, **characterized in that** the third stage (III) in the upper tool part (18) comprises at least one outer-contour cutting punch (33) for cutting the blank (Z) completely free and at least one fifth cutting opening (45) disposed in the cutting die (20), wherein a removal channel (50) is dedicated to the cutting opening (45), which leads to a conveyor belt (519) disposed underneath the upper tool part (18) for removing the finished blank (Z) from the closed tool (19).

14. The device according to claim 10, **characterized in that** a further stage (IIIa) in the form of a no-load stroke is optionally provided between the second and third working stage (II, III).

15. The device according to claim 8, **characterized in that** the upper tool part (18) for the second stage (II) comprises at least one bending punch for bending the end-face edges of the blank (Z).

16. The device according to claim 10, **characterized in that** the forging die (53) and the compression die (26) have a surface structure having grooves or meander-shaped or spiral channels or knobs.

17. The method according to claim 16, **characterized in that** the grooves or channels have different cross-sectional shapes, for example, u-, oval-, semicircular-, parabolic- or v-shaped cross sections.

18. The device according to claim 10, **characterized in that** the metal-foil strip is made of stainless steel, preferably of the quality 1.4404, X2CrNiMo18-14-3, steel, aluminum, aluminum alloys, titanium, titanium alloys and Hastelloy alloys having a thickness of 0.1 to 0.5 mm, preferably 0.1 mm.

19. The device according to claim 10, **characterized in that** the blank (Z) has a plurality of reference geometries.

## Revendications

1. Procédé de fabrication d'une plaque bipolaire en feuille métallique ayant une structure de surface pour le champ d'écoulement, des formes intérieures telles que des trous et des fentes dans la plaque ainsi qu'une géométrie de référence au niveau de sa forme extérieure, selon lequel la bande est amenée à un outil s'ouvrant au point mort bas du coulisseau de la presse et se fermant au point mort haut du coulisseau de la presse, est serrée en fermant l'outil entre une partie supérieure d'outil fixée sur la table de presse et composée d'au moins un poinçon de formage, d'au moins un poinçon de découpage et de perforation et d'un dispositif de guidage, et au moins une partie inférieure d'outil contenant une matrice de découpage et effectuant une course entre points morts haut et bas, et est ensuite soumise à une opération de découpage et de formage, **caractérisé en ce que** l'on utilise comme presse une presse hydraulique de découpage fin dotée d'un outil progressif combiné à au moins trois étapes, dans la première étape duquel un flan est partiellement découpé dans la bande, ensuite dans une deuxième étape, avec une force de formage d'au moins 2500 à 3500 kN, la structure de surface est imprimée dans le flan par formage par compression, la forme intérieure, les fentes et la géométrie de référence étant réalisées par découpage dans et sur le flan, puis dans une troisième étape il est procédé successivement, au rythme de la course, à une découpe du contour extérieur et à l'évacuation du flan achevé de la plaque bipolaire.

2. Procédé selon la revendication 1, **caractérisé en ce que** sont réalisées successivement, au cours d'une même opération, la structure de surface par un moule femelle dans la partie inférieure d'outil et un moule mâle correspondant dans la partie supérieure d'outil, ainsi que la forme intérieure (trous) et les fentes dans la plaque bipolaire par les poinçons de découpage et de perforation dans la partie supérieure d'outil et la matrice de découpage dans la partie inférieure d'outil.

3. Procédé selon la revendication 1 ou 2, **caractérisé en ce que** le formage par compression imprime des structures de surface différentes dans le flan, de préférence un réseau de rainures, des canaux en forme de méandre ou de spirale ou un réseau de petites bosses.

4. Procédé selon la revendication 3, **caractérisé en ce que** les rainures ou canaux sont réalisés avec des sections transversales de formes différentes, par exemple des sections transversales en U, ovales, semi-circulaires, paraboliques ou en V.

5. Procédé selon la revendication 1, **caractérisé par** les caractéristiques supplémentaires suivantes :
a) découpage des bords d'extrémité et optionnellement des bords latéraux du flan d'une plaque bipolaire, le flan restant attaché à la bande,
b) ouverture de l'outil pendant la course retour des poinçons de formage, de perforation et de découpage et introduction de la bande, avec le flan découpé, pour les opérations de formage par compression, de perforation et de découpage puis, une fois la bande à nouveau serrée dans l'outil, formage par compression de la structure de surface, suivi de la formation de trous dans le flan et du découpage de la géométrie de référence au niveau de la forme extérieure du flan, successivement, dans le sens vertical, pendant la deuxième étape en maintenant le flan attaché à la bande,
c) nouvelle ouverture de l'outil pendant le retour des poinçons de formage, de découpage et de perforation au point mort supérieur et introduction du flan découpé, mis en forme par compression, perforé et coupé dans la troisième étape pour couper le contour extérieur de la plaque bipolaire, le flan étant alors séparé de la bande préalablement serrée puis, après une chute verticale au-dessous du plan de coupe, évacué de l'outil fermé au moyen d'une bande transporteuse.

6. Procédé selon la revendication 5, **caractérisé en ce que** pendant la course retour des poinçons de formage, de perforation et de découpage dans la deuxième étape de travail, la forme du bord d'extrémité du flan est modifiée par un poinçon de pliage prévu dans la partie inférieure commandé par le coulisseau de la presse de découpage fin, afin de lui donner la forme d'une branche saillant verticalement en direction de la partie supérieure.

7. Procédé selon la revendication 1, **caractérisé en ce que**, entre la deuxième et la troisième étape, une étape supplémentaire est optionnellement exécutée sous la forme d'une course à vide.

8. Procédé selon la revendication 1, **caractérisé en ce que** l'on utilise comme feuille métallique en bande des feuilles en acier inoxydable, de préférence de qualité 1.4404 ou x2CrNiMo18-14-3, acier, aluminium, alliages d'aluminium, titane, alliages de titane et alliages Hastelloy, ayant une épaisseur comprise entre 0,1 et 0,5 mm, de préférence de 0,1 mm.

9. Procédé selon la revendication 1, **caractérisé en ce que** l'on coupe comme géométries de référence une pluralité de références dans la forme extérieure du flan.

10. Dispositif de fabrication d'une plaque bipolaire en feuille métallique en bande ayant une structure de surface (5) pour le champ d'écoulement, des formes intérieures (7, 8, 9, 10, 11, 12) telles que des trous et des fentes dans la plaque ainsi qu'une géométrie de référence (14, 15, 16) au niveau de son profil extérieur pour la mise en oeuvre du procédé selon la revendication 1, comprenant un outil progressif combiné (19) commandé par un coulisseau (37) d'une presse, dont la partie supérieure d'outil (18) fixée sur la table de presse (23) contient au moins un poinçon de perforation et de découpage (31, 32) ainsi qu'un châssis de guidage (34) et dont la partie inférieure d'outil (17) effectuant une course entre point mort haut et point mort bas du coulisseau (37) contient au moins une matrice de découpage (20), **caractérisé en ce que** l'outil progressif combiné comprend au moins un premier niveau (I) pour dégager partiellement par découpe les bords d'extrémité et optionnellement latéraux (S ; SR) d'un flan (Z) de la plaque bipolaire (1), un deuxième niveau (II) pour former la structure de surface (5) dans le flan (Z), pour réaliser par perforation les formes intérieures (7, 8, 9, 10, 11, 12) et par découpe les géométries de référence (4, 15, 16) sur le flan (Z) dégagé, et un troisième niveau (III) pour découper le contour extérieur et pour évacuer la plaque bipolaire (1) achevée hors de l'outil (19), comme presse étant prévue une presse de découpage fin (22) à pistons à anneau de retenue (24) et pistons à moyen antagoniste (40) qui agissent hydrauliquement en sens opposé sur la partie supérieure d'outil (18) et la partie inférieure d'outil (17) et qui sont adaptés les uns aux autres de telle façon qu'au deuxième niveau (II) au moins un moule mâle (26) pour le formage est en avance par rapport aux poinçons de perforation et de découpage (31, 32) pendant la course de ceux-ci.

11. Dispositif selon la revendication 10, **caractérisé en ce que** le premier niveau (I) comprend dans la partie inférieure d'outil (17) au moins des premiers et deuxièmes orifices de coupe (41, 43) disposés dans la matrice de découpage (20) pour découper partiellement le flan (Z) et dans la partie supérieure d'outil (18) le poinçon de découpage (30), audit orifice de coupe (41, 43) étant associé un canal à déchets (46, 48) qui mène à une bande transporteuse (47 resp. 49) disposée au-dessous de la partie inférieure d'outil (17) pour évacuer les déchets hors de l'outil (19).

12. Dispositif selon la revendication 10, **caractérisé en ce que** le deuxième niveau (II) comprend dans la partie inférieure d'outil (17) au moins un moule femelle (53) placé dans un châssis (52) avec une structure de surface adaptée à la forme, à la configuration et à la position de la structure de surface (5) de la plaque bipolaire (1), au moins des troisième et quatrième orifices de coupe (42, 44) disposés dans la matrice de découpage (20) pour le poinçon (31) réalisant les formes intérieures et le poinçon de découpage (32) ainsi qu'au moins un moule mâle (26) de forme correspondante au moule femelle (53), avec une structure de surface appropriée, inséré dans un insert de guidage de poinceau (34), et dans la partie supérieure d'outil (18) au moins lesdits poinçons pour formes intérieures et de découpage (31, 32), à chaque orifice de coupe (42, 44) étant associé un canal à déchets (48a) qui mène à une bande transporteuse (47 resp. 49) disposée au-dessous de la partie inférieure d'outil (17) pour évacuer les déchets hors de l'outil (19).

13. Dispositif selon la revendication 10, **caractérisé en ce que** le troisième niveau (III) comprend dans la partie supérieure d'outil (18) au moins un poinçon de découpage (33) de contour extérieur pour le découpage complet du flan (Z) et au moins un cinquième orifice de coupe (45) disposé dans la matrice de découpage (20), audit orifice de coupe (45) étant associé un canal d'évacuation (50) qui mène à une bande transporteuse (519) disposée au-dessous de la partie inférieure d'outil (17) pour évacuer le flan (Z) achevé hors de l'outil fermé (19).

14. Dispositif selon la revendication 10, **caractérisé en ce qu'**un niveau supplémentaire (IIIa) sous la forme d'une course à vide est optionnellement prévu entre le deuxième et le troisième palier (II, III).

15. Dispositif selon la revendication 8, **caractérisé en ce que** la partie supérieure d'outil (18) comporte pour le deuxième niveau (II) au moins un poinçon de pliage pour plier les bords d'extrémité du flan (Z).

16. Dispositif selon la revendication 10, **caractérisé en ce que** le moule femelle (53) et le moule mâle (26) ont une structure de surface constituée de rainures ou de canaux en forme de méandre ou de spirale ou de petites bosses.

17. Dispositif selon la revendication 16, **caractérisé en ce que** les rainures ou les canaux ont des sections transversales de formes différentes, par exemple des sections transversales en U, ovales, semi-circulaires, paraboliques ou en V.

18. Dispositif selon la revendication 10, **caractérisé en ce que** la feuille métallique en bande est en acier inoxydable, de préférence de qualité 1.4404 ou X2CrNiMo18-14-3, acier, aluminium, alliages d'aluminium, titane, alliages de titane et alliages Hastelloy, ayant une épaisseur comprise entre 0,1 et 0,5 mm, de préférence de 0,1 mm.

19. Dispositif selon la revendication 10, **caractérisé en ce que** le flan (Z) possède plusieurs géométries de référence.
